# EUROPÄISCHE PATENTANMELDUNG

(11) **EP 3 352 356 A1**
(43) Veröffentlichungstag der Anmeldung: **25.07.2018**
(21) Anmeldenummer: 17152359.0
(22) Anmeldetag: 20.01.2017
(51) Int. Cl.: H02M 1/32

(54) **VERFAHREN ZUM WARTEN EINES MODULAREN MEHRSTUFENUMRICHTERS**

(71) Anmelder: Siemens Aktiengesellschaft, 80333 München (DE)
(72) Erfinder: Böhme, Daniel, 90480 Nürnberg (DE)

(57) **Zusammenfassung**

Die Erfindung betrifft ein Verfahren zum Warten eines modularen Mehrstufenumrichters (1). Das erfindungsgemäße Verfahren zeichnet sich dadurch aus, dass mittels einer geeigneten Ansteuerung von Halbleiterschaltern (8a-b) des Mehrstufenumrichters ein Umrichterkreisstrom erzeugt wird, so dass Umrichterkondensatoren (10) aufgrund des Umrichterkreisstromes aktiv entladen werden.

## Beschreibung

Die Erfindung betrifft ein Verfahren zum Warten eines modularen Mehrstufenumrichters.

Der modulare Mehrstufenumrichter (MMC) ist beispielsweise aus der WO 2016/155850 A1 bekannt. Der MMC zeichnet sich insbesondere durch eine modulare Bauweise aus. Er umfasst Phasenzweige, die sich jeweils zwischen einem Wechselspannungsanschluss und einem von zwei Gleichspannungspolen des MMC erstrecken. Die Phasenzweige des MMC weisen jeweils eine Reihenschaltung zweipoliger Schaltmodule auf, wobei jedes Schaltmodul ein- und abschaltbare Halbleiterschalter sowie einen Energiespeicher, bevorzugt in Form eines Umrichterkondensators, umfasst. Jedes der Schaltmodule ist mittels einer Ansteuereinrichtung einzeln ansteuerbar. Eine an dem Phasenzweig abfallende Spannung ist gleich der Summe von Spannungen, die an den zugehörigen Schaltmodulen abfallen. Mittels des MMC ist eine besonders vorteilhafte stufenförmige Konverterspannung erzeugbar. Die Schaltmodule sind meist als Halbbrückenschaltungen oder als Vollbrückenschaltungen ausgebildet. Das Schaltmodul in Halbbrückenschaltung weist zwei abschaltbare Halbleiterschalter und einen Energiespeicher auf, wobei die Halbleiterschalter so mit dem Energiespeicher verschaltet sind, dass an den Ausgangsklemmen des Schaltmoduls eine an dem Energiespeicher abfallende Energiespeicherspannung oder eine Nullspannung erzeugbar ist.

Bei einer Wartung eines MMC ist es notwendig, die Energiespeicher der Schaltmodule aus Sicherheitsgründen zumindest nahezu vollständig zu entladen. Es ist bekannt, dass eine passive Entladung der Umrichterkondensatoren über geeignete Entladewiderstände bis zu einer Stunde oder länger dauern kann. Eine lange Entladezeit führt nachteilig zu einer entsprechend langen Ausfallzeit des MMC. Etwaige Wartungsarbeiten am MMC, wie beispielsweise ein Austausch fehlerhafter Komponenten des MMC können erst nach der Entladung der Umrichterkondensatoren erfolgen.

Die Aufgabe der Erfindung besteht darin, ein artgemäßes Verfahren vorzuschlagen, das eine möglichst zügige und sichere Wartung des modularen Mehrstufenumrichters ermöglicht.

Die Aufgabe wird bei einem artgemäßen Verfahren dadurch gelöst, dass mittels einer geeigneten Ansteuerung der Halbleiterschalter des Mehrstufenumrichters ein Umrichterkreisstrom erzeugt wird, so dass Umrichterkondensatoren aufgrund des Umrichterkreisstromes aktiv entladen werden. Erfindungsgemäß wird demnach die Entladung nicht passiv abgewartet, sondern eine aktive Entladung der Energiespeicher durch eine Erzeugung eines Kreisstromes im MMC durchgeführt. Ein Umrichterkreisstrom zeichnet sich dadurch aus, dass er nur in den Phasenzweigen des MMC fließt, ohne in ein angeschlossenes Wechselspannungsnetz oder eine Gleichspannungsleitung hineinzufließen.

Ein Vorteil des erfindungsgemäßen Verfahrens besteht darin, dass die Entladung zeitlich schneller durchgeführt werden kann. Auf diese Weise lässt sich die Ausfallzeit des MMC vorteilhaft verkürzen. Zugleich kann sichergestellt werden, dass die Energiespeicher während der Wartungsarbeiten am Umrichter entladen sind, so dass keine Gefahr für das die Wartungsarbeiten durchführende Personal entsteht.

Ein weiterer Vorteil des erfindungsgemäßen Verfahrens besteht darin, dass etwaigen Entladewiderständen des MMC ein höherer Widerstandswert zugewiesen werden kann, ohne, dass die Gesamtentladezeit der Umrichterkondensatoren steigt. Dies kann die Verluste und damit die Betriebskosten des MMC vorteilhaft senken.

Der Umrichterkreisstrom kann erzeugt werden, weil die Leistungshalbleiter in den Schalmodulen des MMC einzeln ansteuerbar sind und der MMC über eine Regelungseinheit verfügt, mittels der die Zweigspannungen an den Phasenzweigen beliebig einstellbar sind. Zur Erzeugung des Umrichterkreisstroms können die Schaltmodule beispielsweise derart angesteuert werden, dass in jedem Phasenzweig Zweigspannungen gleicher Amplitude und Frequenz erzeugt werden, wobei die Zweigspannungen unterschiedlicher Phasenzweige gegeneinander auf geeignete Weise phasenversetzt sind. Einige weitere Möglichkeiten zur Erzeugung des Umrichterkreisstroms sind beispielsweise aus dem Beitrag von Soong et al. "Internal Power Flow of a Modular Multilevel Converter With Distributed Energy Resources", IEEE JOURNAL OF EMERGING AND SELECTED TOPICS IN POWER ELECTRONICS, VOL. 2, NO. 4, DECEMBER 2014, bekannt. Die Erzeugung des Umrichterkreisstroms erfolgt beispielsweise über eine zeitliche Dauer von 1 Min bis 20 Min, bevorzugt zwischen 5 Min und 10 Min.

Zweckmäßigerweise fließt der Umrichterkreisstrom über die Halbleiterschalter des Mehrstufenumrichters. Aufgrund der thermischen Verluste in den Halbleiterschaltern wird die elektrische Energie der Umrichterkondensatoren in Wärme umgewandelt, wodurch die Umrichterkondensatoren effektiv entladen werden.

Geeigneterweise erfolgt das Erzeugen des Umrichterkreisstromes nach einem Öffnen anlagenseitiger Schalter des Mehrstufenumrichters. Die anlagenseitigen Schalter sind zweckmäßigerweise dazu vorgesehen, eine wechselspannungsseitige Verbindung des MMC mit einem Wechselspannungsnetz zu trennen bzw. zu unterbrechen. Weitere anlagenseitige Schalter können dazu vorgesehen sein, eine gleichspannungsseitige Verbindung des MMC mit einer Gleichspannungsleitung zu trennen bzw. zu unterbrechen. Werden die anlagenseitigen Schalter geöffnet, so ist die Verbindung des MMC von der netzseitigen Spannungs- bzw. Stromquelle unterbrochen. Auf diese Weise können die Umrichterkondensatoren nicht mehr aus dem Wechselspannungsnetz bzw. dem Gleichspannungszwischenkreis aufgeladen werden.

Vorzugsweise wird der Umrichterkreisstrom so lange erzeugt, bis eine Umrichteransteuerung aufgrund einer Unterspannung unmöglich wird. Ist eine externe Energieversorgung unterbrochen, so tritt nach einer bestimmten Zeit eine Unterversorgung von Ansteuerbaugruppen auf, die für die Ansteuerung der Halbleiterschalter zuständig sind. Die Erzeugung des Umrichterkreisstroms kann jedoch solange fortgesetzt werden, wie eine Spannungsversorgung der Ansteuereinheit gewährleistet ist. Dabei wird die Entladung bei einer dafür vorbestimmten Kondensatorschwellspannung zweckmäßigerweise beendet.

Geeigneterweise erfolgt das Erzeugen des Umrichterkreisstromes vor einem Schließen anlagenseitiger Erdungsschalter. Die anlagenseitigen Erdungsschalter bewirken eine Erdung des MMC.

Zweckmäßigerweise erfolgen die Wartungsarbeiten am Mehrstufenumrichter nach dem Entladen, bevorzugt nach dem vollständigen Entladen der Umrichterkondensatoren.

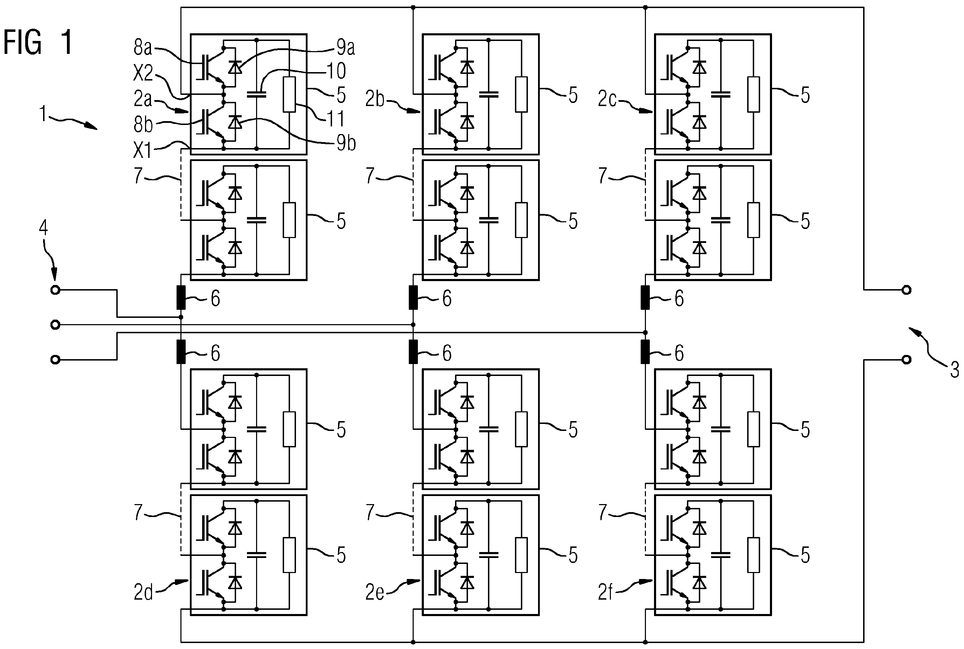

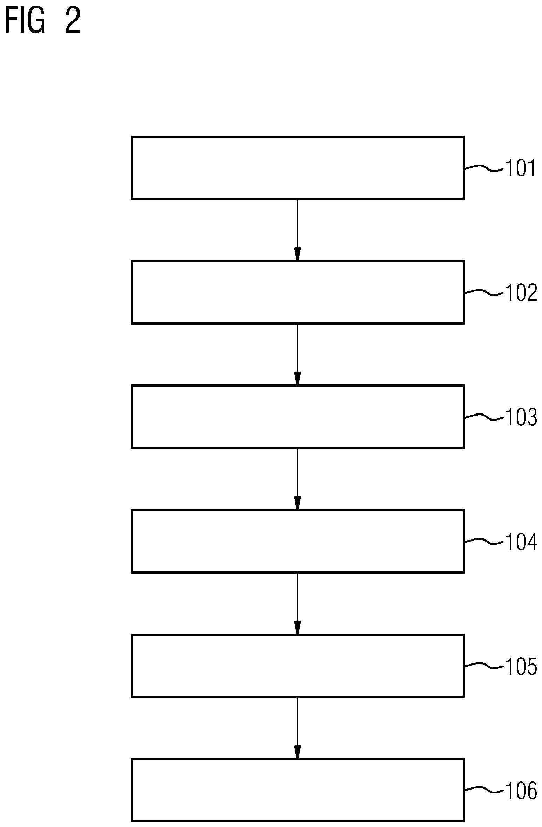

Die Erfindung soll im Folgenden anhand der Figuren 1 und 2 weiter erläutert werden.
Figur 1 zeigt ein Beispiel eines MMC in einer schematischen Darstellung;
Figur 2 zeigt ein Ablaufdiagramm eines Ausführungsbeispiels des erfindungsgemäßen Verfahrens.

Im Einzelnen ist in Figur 1 ein modularer Mehrstufenumrichter (MMC) 1 dargestellt. Der MMC 1 ist zwischen einem Wechselspannungsanschluss 4 und einem Gleichspannungsanschluss 3 geschaltet. Damit ist der MMC 1 gleichspannungsseitig mit einer Gleichspannungsleitung bzw. einem Gleichspannungsnetz, wechselspannungsseitig mit einem Wechselspannungsnetz verbindbar. Der MMC weist zwischen der Gleichspannungsseite und der Wechselspannungsseite angeordnete Phasenzweige 2a-2f auf.

Jeder Phasenzweig 2a-2f umfasst eine Reihenschaltung von zweipoligen Schaltmodulen 5 sowie eine Glättungsdrossel 6. Im in Figur 1 dargestellten Ausführungsbeispiel sind alle Schaltmodule 5 gleichartig aufgebaut, was jedoch im Allgemeinen nicht erforderlich ist. Mittels unterbrochener Linien 7 ist in Figur 1 angedeutet, dass jeder Phasenzweig 2a-2f eine größere Anzahl von Schaltmodulen 5 aufweisen kann als die in Figur 1 explizit dargestellten zwei Schaltmodule 5.

Jedes Schaltmodul 5 umfasst zwei Halbleiterschalter 8a, 8b, dem jeweils eine Freilaufdiode 9a bzw. 9b antiparallel geschaltet ist, und einen Energiespeicher in Form eines Umrichterkondensators 10. Eine erste Anschlussklemme X1 des Schaltmoduls 5 ist direkt mit dem Energiespeicher 10 verbunden. Eine zweite Anschlussklemme X2 ist mit einem Potenzialpunkt zwischen den Halbleiterschaltern 8a und 8b verbunden. Die Schaltmodule 5 sind somit als Halbbrückenschaltungen ausgebildet. Die Halbleiterschalter 8a-b der Schaltmodule 5 sind voneinander unabhängig steuerbar, wobei die Halbleiterschalter beispielsweise als ein- und abschaltbare IGBT-Schalter realisiert sind. Mittels geeigneter Ansteuerung der Halbleiterschalter kann an den Anschlussklemmen X1, X2 des Schaltmoduls 5 die am Energiespeicher 10 abfallende Spannung oder eine Nullspannung eingestellt werden.

In einem Parallelzweig zum Energiespeicher 10 ist ein Entladewiderstand 11 angeordnet. Der Energiespeicher 10 kann somit über den Entladewiderstand 11 entladen.

Anhand der Figur 2 soll der Ablauf eines Ausführungsbeispiels des erfindungsgemäßen Verfahrens erläutert werden.

In einem ersten Schritt 101 wird eine Entscheidung getroffen, dass eine Wartung eines modularen Mehrstufenumrichters (MMC) notwendig ist und durchgeführt werden soll. Diese Entscheidung kann automatisch aufgrund bestimmter Betriebsparameter getroffen werden. Zum Zeitpunkt der Entscheidung befindet sich der MMC im Betrieb.

In einem darauffolgenden zweiten Verfahrensschritt 102 wird der MMC abgeschaltet. Dazu werden insbesondere alle Halbleiterschalter des MMC gesperrt.

In einem dritten Verfahrensschritt 103 werden alle anlagenseitigen Schalter geöffnet. Die anlagenseitigen Schalter sind alle Leistungsschalter und Trenner, die den MMC mit einem angeschlossenen Wechselspannungsnetz und einem Gleichspannungszwischenkreis verbinden.

In einem vierten Verfahrensschritt 104 werden die Halbleiterschalter des MMC angesteuert, so dass ein Umrichterkreisstrom erzeugt wird. Auf diese Weise werden Umrichterkondensatoren aufgrund des Umrichterkreisstromes entladen. Der Umrichterkreisstrom wird so lange durch Phasenzweige des MMC getrieben, bis Ansteuerbausteine des MMC aufgrund von Unterspannung ihren Dienst einstellen. Als weiteres Kriterium wird die aktive Entladung beendet, sobald die Kondensatorspannungen eine vorbestimmte Kondensatorschwellspannung erreicht oder unterschreitet. Der vierte Verfahrensschritt 104 wird für eine Dauer von 2 Min bis 10 Min durchgeführt.

In einem weiteren, fünften Verfahrensschritt 105 werden nach einem Blockieren der Halbleiterschalter des MMC anlagenseitige Erdungsschalter des MMC geschlossen, wodurch alle Komponenten des MMC geerdet werden.

In einem sechsten Verfahrensschritt 106 werden während einer Zeitdauer von 5 Min bis 40 Min die Umrichterkondensatoren passiv über Entladewiderstände entladen. Danach werden die vorgesehenen Wartungsarbeiten am MMC vorgenommen.

## Patentansprüche

1. Verfahren zum Warten eines modularen Mehrstufenumrichters (1), bei dem mittels einer geeigneten Ansteuerung von Halbleiterschaltern (8a, 8b) des Mehrstufenumrichters (1) ein Umrichterkreisstrom erzeugt wird, so dass Umrichterkondensatoren (10) aufgrund des Umrichterkreisstromes entladen werden.

2. Verfahren nach Anspruch 1, wobei der Umrichterkreisstrom über die Halbleiterschalter (8a-b) des Mehrstufenumrichters (1) fließt.

3. Verfahren nach einem der vorangehenden Ansprüche, wobei das Erzeugen des Umrichterkreisstromes nach einem Öffnen anlagenseitiger Schalter des Mehrstufenumrichters erfolgt.

4. Verfahren nach einem der vorangehenden Ansprüche, wobei der Umrichterkreisstrom so lange erzeugt wird, bis eine Umrichteransteuerung aufgrund einer Unterspannung unmöglich wird.

5. Verfahren nach einem der vorangehenden Ansprüche, wobei das Erzeugen des Umrichterkreisstromes vor einem Schließen anlagenseitiger Erdungsschalter erfolgt.

6. Verfahren nach einem der vorangehenden Ansprüche, wobei Wartungsarbeiten am Mehrstufenumrichter (1) nach dem Entladen der Umrichterkondensatoren (10) erfolgen.
